## Europäisches Patentamt

## European Patent Office

## Office européen des brevets

(11) Publication number: **0 054 393**
**B1**

## (12) EUROPEAN PATENT SPECIFICATION

(45) Date of publication of patent specification: **18.09.85**

(21) Application number: **81305768.4**

(22) Date of filing: **07.12.81**

(51) Int. Cl.⁴: **B 01 J 35/10, B 01 J 21/18, B 01 J 23/74, B 01 J 23/28**

(54) **Compositions comprising highly dispersed metal on a graphite support.**

(30) Priority: **11.12.80 US 215401**
**11.12.80 US 215514**
**05.01.81 US 222644**
**27.03.81 US 248266**
**03.08.81 US 289264**

(43) Date of publication of application:
**23.06.82 Bulletin 82/25**

(45) Publication of the grant of the patent:
**18.09.85 Bulletin 85/38**

(84) Designated Contracting States:
**BE DE FR GB IT NL SE**

(56) References cited:
**DE-A-2 454 846**
**FR-A-2 289 237**
**US-A-4 055 628**

**CHEMICAL ABSTRACTS, vol. 95, no. 22, 30th Nov 1981, abstract 189805s, p. 159, COLUMBUS, OHIO, R.T.K. BAKER et al.: "In situ observation of catalyzed gasification of graphite by nickel"**

(73) Proprietor: **Exxon Research and Engineering Company**
**P.O.Box 390 180 Park Avenue**
**Florham Park New Jersey 07932 (US)**

(72) Inventor: **Sherwood, Rexford Dallas**
**1 Timber Trail**
**Suffern New York (US)**
Inventor: **Baker, Rees Terrence Keith**
**200 Gallinson Drive**
**Murray Hill New Jersey (US)**
Inventor: **Derouane, Eric Gerard**
**56 Rue des Champs**
**Namur (Champion) (BE)**
Inventor: **Pieters, Wim Johan Meindert**
**12 Springview Drive**
**Morristown New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

Courier Press, Leamington Spa, England.

# Description

Metals of Groups VIA and VIII of the Periodic Table, such as Ni, Co and Mo, deposited on a graphite support are known to be useful for various purposes including hydrogenation catalysis. Those skilled in the art know that the average particle size of the catalytic metal on a graphite support generally ranges from about 25Å to 1,000Å ($2.5 \times 10^{-9}$ to $10^{-7}$ m) in diameter, with the vast majority of such catalysts having particles whose diameters range from between about 50Å to 250Å ($5 \times 10^{-9}$ to $2.5 \times 10^{-8}$ m). Inasmuch as the catalytic activity of such catalysts is a function of the size of the catalyst particles, smaller metal particles will result in much more catalytically active species. It would be an improvement to the art if one could achieve catalyst compositions wherein the metal on the graphite is in the form of highly dispersed, discrete particles which have an average diameter below about 100Å ($10^{-8}$ m), preferably below about 50Å ($5 \times 10^{-9}$ m) and still more preferably below about 25Å ($2.5 \times 10^{-9}$ m).

What has now been discovered is a composition of matter comprising highly dispersed, discrete metal particles on a graphite support wherein said metal particles are on the surface of channels in the graphite, wherein said channels are on the surface of the graphite and orientated in a direction parallel to the basal plane of the graphite. The metal will comprise one or more metals selected from Ni, Co, Mo and mixtures thereof. A particularly preferred metal comprises Ni. Although the metal particles may have diameters as large as the width of the channels (i.e., 1,000—1,500Å), (i.e. $10^{-7}$—$1.5 \times 10^{-7}$ m), it is preferred that the average diameter of the dispersed metal particles be below 100Å ($10^{-8}$ m) preferably below 50Å ($5 \times 10^{-9}$ m) and still more preferably below 25Å. The channels are formed in the graphite via the catalytic gasification thereof with hydrogen wherein the metal acts as the catalyst for the gasification reaction.

The composition or catalyst of this invention is formed via a process which comprises sequential steps of (a) contacting a metal-graphite composite with a net-reducing, hydrogen-containing atmosphere at a temperature of from 800—975°C for a time sufficient for the metal to form a plurality of metal-containing channels in the graphite, (b) contacting the metal-containing, channeled composite formed in (a) with a net-reducing, hydrogen-containing atmosphere at a temperature of at least 975°C for a time sufficient for the metal in said channels to spread out and chemically wet as a film at least a portion of the surface of said channels followed by (c) contacting the metal-wetted, channeled composite formed in (b) with an oxidising atmosphere at a temperature of at least 800°C to break up the film of metal phase in said channels into discrete particles of said metal on said graphite, the average diameter of said particles being less than 100Å ($10^{-8}$ m). Preferred metals are Ni and Co and a particularly preferred metal is Ni. The amount of nickel present in the composite is preferably 5 to 30 wt % of the total weight thereof.

The above defined process can be used to gasify carbon catalytically with steam by including a final step (d) comprising contacting the dispersed metal/graphite composite formed in (c) with steam at a temperature of at least 800°C for a time sufficient for the metal to achieve the desired amount of gasification of the carbon.

The metal is supported on a graphite support by which term is meant any graphite or graphite-containing support. Suitable supports include relatively pure forms of graphite such as graphite single crystals and Grafoil. The word 'Grafoil' is a registered Trade Mark. Also suitable are mixtures of graphite with other materials. Illustrative but non-limiting examples of mixtures of graphite with other carbonaceous materials include asphalt, pitch, coke formed as a result of various hydrocarbon conversion reactions in petroleum refineries and petrochemical plants, etc., as well as coke formed on catalysts containing Ni, Co, Mo and mixtures thereof. As if well known to those skilled in the art, crystalline forms of carbon such as graphite have a basal plane or a-face ($<11\overline{2}0>$ direction) and a plane perpendicular to the basal plane called a c-face. In the process of this invention, particles of the metal create channels having a depth in the c-face by catalytically gasifying the graphite with hydrogen. These channels are formed across the surface of the graphite and are orientated parallel to the basal plane. This increases the surface area of the c-face. It has been found that the metal will channel into the c-face surface and chemically wet the surface of the so-formed channels. These channels are formed along the basal planes. The depth of the channels into the c-face is generally about one third of their width. It has also been found that if the graphite is mixed with non-graphitic or amorphous carbon, the channelling metal particles will continue to channel into and gasify the amorphous carbon. Thus, the channeling metal particles will gasify a mixture of graphite and non-graphitic or amorphous carbon.

As has heretofore been stated, metals that have been found to be useful for the composition of matter of this invention are Ni, Co, Mo and mixtures thereof. Nickel and cobalt are preferred and nickel is particularly preferred as the metal. It is understood, of course, that the process of forming the catalyst of this invention may start with a composite of the metal and graphite or graphite-containing material. Illustrative, but non-limiting examples include coke deposited on a metal surface containing one or more of said metals, coked catalysts, etc. Preferably, the metal is added to the graphite or graphite-containing support by any convenient means known to those skilled in the art. Illustrative, but non-limiting examples include evaporating the metal onto the graphite in a vacuum, plasma or flame spraying the metal onto the support and various wet chemistry techniques employing metal precursors such as impregnation, incipient wetness, etc., followed by drying and contacting with a reducing atmosphere at elevated temperature to ensure that the deposited metal is in the reduced, metallic form. Reducing the metal may be part of that step of the process of forming the composition of matter of this invention wherein the composite of graphite and metal is contacted with a hydrogen-containing, net-reducing atmosphere at elevated temperature to form metal-containing channels in the graphite support. Metal precursors may be initially present on the graphite in the form of a metal salt or oxide such as carbonate, bicarbonate, sulfate, nitrate, etc., the main criterion being that the metal precursor be capable of decomposing to or being reduced to the metal at a temperature below about 875°C and preferably below about 800°C.

The metal-graphite composite must be heated in a hydrogen-containing, net-reducing atmosphere at a temperature within the range of from 800—975°C for a time sufficient for the metal to form a plurality of metal-containing channels in the graphite. The hydrogen-containing atmosphere should be net reducing to both the metal and graphite and must be net reducing to the metal. Enough hydrogen must be present to allow the metal to catalytically gasify and channel the graphite. The hydrogen may be initially present as a component of the atmosphere or it may be formed in-situ by using a mixture of, for example, steam and ethane and other mixtures of steam and saturated hydrocarbons such as paraffins and saturated cyclic hydrocarbons. The temperature range for channelling is critical inasmuch as channels will not be formed at temperatures below about 800°C. At temperatures above about 975°C, in a hydrogen-containing, net-reducing atmosphere, the metal will spread out and chemically wet the channels as a thin film at which point catalytic gasification and channelling cease. Channelling temperatures of from 800—975°C are preferred and particularly preferred are temperatures within the range of from 800—925°C.

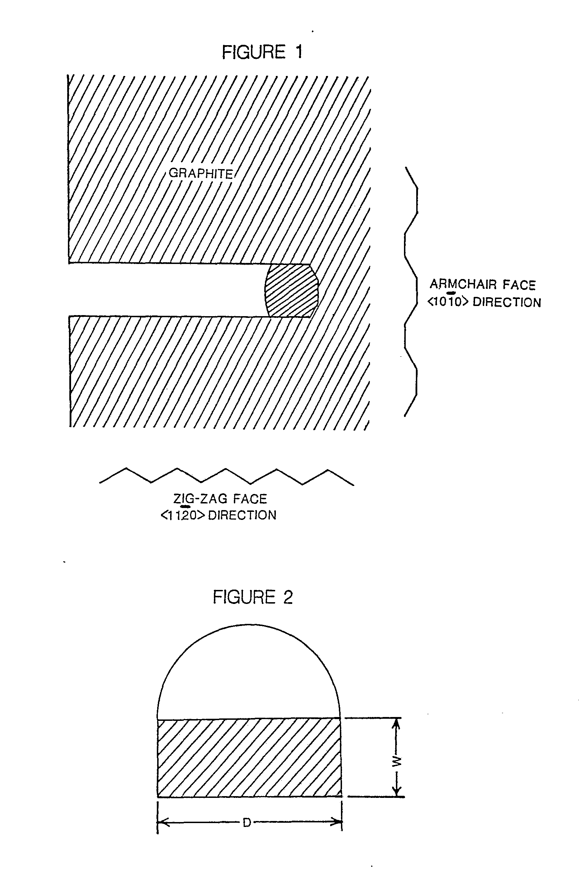

When the metal channels into the c-face of the graphite, it does so by catalytically gasifying the carbon with hydrogen to form a gas such as methane. Figure 1 schematically illustrates gasification and channeling of the graphite by a globule of nickel about 500Å ($5 \times 10^{-8}$ m) in diameter. In a preferred embodiment of the invention, the metal-graphite composite will be heated within this temperature range in the net-reducing, hydrogen-containing atmosphere for a time sufficient to achieve from about 5—20 wt. % gasification of the graphite support. Unless catalytic gasification of the graphite or graphite-amorphous carbon mixture is the desired result, it is preferred that the total catalytic gasification of the graphite due to the channeling does not exceed about 25 wt. % of the graphite. In practice, it has been found that the gasification rate of the graphite is roughly proportional to the concentration of metal thereon up to about 5 wt. %

metal. As the amount of metal on the graphite exceeds about 5 wt. %, the gasification rate approaches a constant value.

After channeling of the graphite support has proceeded to the desired level, as evidenced by the amount of gasification of the graphite, the temperature is raised above 975°C at which point the metal in the channels spreads out and chemically wets the surface of the so-formed channels as a film of metal phase and catalytic gasification ceases. By chemical wetting it is meant that the metal wets and chemically bonds to the surface of the channels in the graphite. While not wishing to be held to any particular theory, it is believed that the metal chemically wets the channels as a film approximately one monolayer thick. The metal film exhibits strong interaction with the graphite support and is in itself a unique composition of matter inasmuch as it does not exhibit the properties of the bulk metal. Thus, the term "metal phase" refers to this unique film. In order for this metal-wetting to occur, it is important that the metal-graphite composite be in contact with a net-reducing, hydrogen-containing atmosphere. This atmosphere should be net-reducing with respect to both the metal and graphite support and must be net-reducing with respect to the metal. A preferred temperature range for the wetting and metal phase film forming step will range from about 975 to 1150°C, the upper limit being governed by non-catalytic gasification of the graphite which begins to occur at about 1200°C in the presence of hydrogen. However, if necessary, one can exceed the upper limit of 1150°C without adversely affecting the metal wetted surface of the composite. One merely loses more graphite support.

In the final step of the process, the metal-wetted, channeled composite is contacted with an oxidizing atmosphere, preferably a mild oxidizing atmosphere such as $CO_2$ or steam and most preferably steam (e.g. 5 to 100% steam), at a temperature of at least 800°C which breaks up to the metal phase film in the channels into a highly dispersed form of metal which exists as discrete particles having an average diameter of below $10^{-8}$m, preferably less than 25Å ($2.5 \times 10^{-9}$ m). It is believed that the average diameter of the metal particles is below about 10Å ($10^{-9}$ m) when the metal film initially breaks up. However, continued heating of the dispersed-metal/graphite composite at temperatures of 1,000°C and higher will cause these metal particles to agglomerate and grow in size. If desired, particle sizes of 500Å ($5 \times 10^{-8}$ m) or more in diameter can be achieved. This thus provides a novel and convenient way of achieving a wide range of average particle sizes having relatively narrow particle size distribution of the dispersed metal at any given particle size. It is understood, of course, that contacting the metal film/graphite composite with a metal oxidizing atmosphere will result in at least a portion of the dispersed metal (i.e., at least a portion of the surface thereof) particles being in the oxide form which can then be reduced back to the metal by contact with a hydrogen-containing, net-reducing atmosphere at a temperature below about 975°C to avoid rewetting the graphite with the dispersed metal and concomitant film formation. This results in a much more active catalyst because of the greater metal area compared to conventional dispersions of metals, such as nickel on graphite, wherein the average particle diameter ranges from between about 50—1,000Å $(5\times10^{-9}$—$10^{-7}$ m) and, more generally, between from about 100—250Å $(10^{-8}$—$2.5\times10^{-8}$ m) and where there is generally a wide particle size distribution. Illustrative, but non-limiting examples of suitable oxidizing atmospheres includes steam, carbon dioxide, nitric oxide, oxygen, air, etc.

The invention is further illustrated in the drawings in which:

Figure 1 is a schematic illustration of a globule of metal about 500Å $(5\times10^{-8}$ m) in diameter channeling into the c-face of graphite.

Figure 2 is a schematic illustration of a globule or particle of channeling metal having the general shape of a hemispherical topped cylinder of diameter D; and

Figure 3 is a plot of experimental data showing the relative rate of graphite gasification in a net-reducing, hydrogen-containing atmosphere as a function of nickel particle diameter at a given total quantity of nickel.

The invention will be more readily understood by reference to the examples below.

Example 1

Spectrographically pure nickel (99.9% pure) was deposited onto transmission specimens of single crystals of graphite (Ticonderoga, New York State) as a monolayer film approximately one atom thick by evaporation from a heated tungsten filament at a residual pressure of $5\times10^{-6}$ Torr $(6.666\times10^{-4}$ N/m$^2$). These nickel-containing specimens were placed in a controlled atmosphere electron microscope (CAEM) for the experimental work. Ethane 99.999% pure (Scientific Gas Products) was bubbled through water at 0°C to generate a 40/1 ethane/water gas mixture which was then passed through the CAEM at a pressure of 1.0 Torr (133.3 N/m$^2$). As the nickel/graphite specimens were heated in the ethane/steam atmosphere in the CAEM, sporadic nucleation of the evaporated nickel film into small discrete particles was observed at a temperature of about 750°C. Those skilled in the art will know that the ethane/steam mixture formed hydrogen in-situ in the CAEM on contact with the nickel/graphite specimens. As the temperature was gradually raised to 890°C particle nucleation and growth became more extensive and the first signs of catalytic attack were observed. This action was seen as the creation of very fine straight channels parallel to the a-face ($<11\overline{2}0>$) and perpendicular to the c-face produced by metal particles (50—150Å diam. $(5\times10^{-9}$—$1.5\times10^{-8}$ m) which had collected at edges and steps on the surface. As the temperature was raised both the depth and size of particles propagating channels increased. At any given temperature it was apparent that the largest particles were producing channels at the fastest rates. Catalytic action increased in intensity until the temperature reached about 1,000°C, when many of the narrower channels suddenly became devoid of catalyst particles at their head. This behavior became more generalized at 1,050°C, extending to include even the larger particles (5,000Å) $(5\times10^{-7}$ m) and was identical in every respect to that observed for nickel/graphite specimens in a hydrogen atmosphere set forth in Example 4 below. Ultimately the channeling ceased as the nickel particles became completely disseminated. Continued heating up to 1,250°C produced no further catalytic action or restoration of the original particles and only at the highest temperatures were indications of uncatalyzed gasification of graphite apparent. Discrete nickel particle formation was achieved again by treating these inactive specimens in oxygen at 850°C.

Example 2

In this example, nickel/graphite specimens produced as in Example 1 were placed in the CAEM in the presence of pure (99.999%) oxygen at a pressure of 5 Torr $(6.666\times10^2$ N/m$^2$). Nucleation of nickel particles was essentially complete at about 635°C. As the temperature was slowly raised, there was very little evidence of catalytic gasification. The experiment was concluded at 1150°C due to vigorous, uncatalyzed gasification of the graphite which often resulted in specimen disintegration.

Example 3

This experiment was similar to that in Examples 1 and 2, except that the atmosphere in the CAEM was 40/1 argon/steam at a pressure of 1 Torr. Thus, in this experiment as in that in Example 2, an oxidizing atmosphere was used in the CAEM. The results were similar to those in Example 2 except that catalytic gasification of the carbon ensued at about 935°C with the nickel particles forming channels in the graphite parallel to the basal plane. Uncatalyzed attack of the graphite became significant at about 1,100°C.

Example 4

This experiment was similar to that of Examples 1—3, except that the atmosphere in the CAEM was 1 Torr dry hydrogen (99.999% pure). Nickel particle nucleation commenced at about 755°C with catalytic attack of the graphite commencing at about 845°C which was seen as the development of fine channels parallel to the a-face or basal plane of the graphite surface. As the temperature was raised, both the size and the number of channeling particles increased. The channels were up to 1,500Å $(1.5\times10^{-7}$ m) in width, had many straight sections interrupted by changes in direction of 60° or 120°, and were orientated parallel to the basal plane. There were also examples of particles possessing hexagonal facets at the graphite-catalyst interface which were orientated parallel to $(10\overline{1}0)$ directions.

On continued reaction it became evident that the channeling nickel particles were wetting the channels formed in the graphite and leaving material on the sides thereof. As a consequence the nickel catalyst particles became smaller giving the channels a tapered appearance and, ultimately when all the catalyst was depleted, channels ceased to develop. The thickness of the nickel film formed on the surfaces of the channels was less than the 25Å $(2.5 \times 10^{-9}$ m) resolution of the CAEM. This wetting phenomenon, which started at 980°C, was essentially complete by the time the temperature had been raised to 1,098°C. Continued heating in hydrogen up to 1,250°C produced no further catalytic action or restoration of the original particles and only at the highest temperature was it possible to detect signs of uncatalyzed attack. Subsequent cooling or heating in vacuo produced no change in specimen appearance, indicating that the metal-support interaction was very strong. It was significant that inactive particles remained static on the surface and showed less tendency to lose material during the reaction. If hydrogen was replaced by oxygen and the specimen reheated, then at 850°C, small particles less than about 25Å $(2.5 \times 10^{-9}$ m) diameter started to reform along the edges of the original channels which were in the process of undergoing expansion due to uncatalyzed oxidation. This observation supported the idea that particle shrinkage in hydrogen was due to film formation along channel edges rather than volatilization. Eventually, at 1,065°C in oxygen these particles proceeded to cut very fine channels emanating from the edges of the original channels. This behavior paralleled that found for Ni/graphite heated directly in oxygen.

Example 5

This experiment was similar to those of Examples 1—4, except that the atmosphere in the CAEM was hydrogen/steam at a 40/1 ratio. The results were similar to those obtained in Example 4, except that channeling occurred at about 780°C and uncatalyzed attack occurred at about 1,150°C.

Thus, in oxidizing environments the major source of carbon gasification was due to uncatalyzed attack by the oxidizing atmosphere (Examples 2—3) whereas in the hydrogen-containing atmospheres, which were net reducing with respect to the nickel (Examples 1, 4 and 5), the carbon gasification was virtually completely catalytic. The most significant aspect of these examples resides in the discovery that, in a net-reducing, hydrogen-containing atmosphere, the nickel spread out and wetted the so-formed channel surfaces and that if the so-formed nickel film was exposed to an oxidizing atmosphere (i.e., $O_2$ or $H_2O$), discrete particles of nickel formed from the film on the channel surfaces and the catalytic gasification process could be repeated if one then switched back to a net-reducing, hydrogen-containing atmosphere. The cycle of channeling, wetting and redispersion of the nickel into discrete particles could be repeated indefinitely until there was virtually no graphite left.

Example 6

This experiment was identical to that of Example 1, except that the atmosphere in the CAEM was ethane/hydrogen/steam in a ratio of approximately 38/2/1, respectively. Nickel particle nucleation occurred at about 750°C, but was much crisper than that in Example 1 and channeling occurred at about 845°C. The presence of 5% hydrogen in the ethane/steam mixture of Example 1 resulted in a five-fold increase in the rate of the nickel catalyzed gasification of the graphite.

Example 7

This example demonstrates the unusual and unique hydrogen chemisorption properties of the wetted nickel film on the channel surfaces of the graphite. Nickel on Grafoil specimens were prepared using an incipient wetness technique. 5 mm discs of Grafoil were soaked in a solution of nickel acetate in methanol for one-half hour at 80°C after which the Grafoil discs were dried for eight hours at 120°C and washed with methanol to remove the excess nickel salt to produce a nickel/Grafoil precursor. The unreduced nickel content of this precursor material was 2.7 wt. %. This precursor was reduced for two hours at 600°C in pure hydrogen to produce nickel/Grafoil specimens. Specific details of the subsequent experiments are given in Tables 1—3 which are summarized below.

Following reduction at 600°C, the nickel/Grafoil specimens adsorbed (per gram) 0.080 cc of hydrogen, of which 0.048 cc was reversibly adsorbed, at an equilibrium hydrogen pressure of 0.26 atm. Under the same conditions, but following an additional treatment in hydrogen at 1,100°C for one hour, the nickel/Grafoil did not show any hydrogen chemisorption capacity which indicates a modification in the hydrogen chemisorption properties of nickel in the new state produced by the latter treatment. When this material was steamed at 1,000°C in a $H_2O$:He stream (1:40) for one to two hours, the hydrogen capacity was partially restored as 0.043 cc of hydrogen could be chemisorbed. By further re-reduction at 600°C for 0.5 hours, the latter value was increased to 0.052 cc of hydrogen per gram of catalyst. It was then concluded that steaming the modified nickel/Grafoil composite restored the original chemisorption properties of the nickel.

This example demonstrates that:

treatment in hydrogen at 1,000—1,100°C of nickel on graphite (Grafoil) leads to a new chemical state of nickel in which the metal does not show its usual hydrogen chemisorption properties; and

the new chemical state of nickel on graphite (Grafoil) that can be prepared by the above treatment can be broken to regenerate the nickel film as small nickel particles which chemisorb hydrogen.

Additional experiments employing ferromagnetic resonance studies of the nickel/Grafoil specimens supported the hydrogen chemisorption studies and reinforced the conclusions that a film-like nickel phase formed by wetting in the channels and that this phase strongly interacts with the Grafoil support and contains very little dissolved carbon.

Example 8

This example demonstrates the great increase in the overall rate of gasification of graphite that is achieved when a large particle of catalytic metal is redispersed into a number of smaller particles.

The catalytic effect of two particles, (a) 80Å ($8\times10^{-9}$ m) in diameter and (b) 800Å ($8\times10^{-8}$ m) in diameter which gasify carbon by the channeling mode, is examined using the following mathematical procedure:

(i) Computation of the particle volumes

During channel formation, electron microscopy has revealed that channeling particles assume a shape which is best approximated by a cylinder of diameter D and height W surmounted by a hemisphere of diameter D, as depicted in Figure 2. The cylindrical portion of the particle is embedded in the channel, and the hemispherical portion projects from the surface.

The volume of such a particle is given by:

$$V=\frac{\pi D^2}{4}W+\frac{2}{3}\frac{\pi D^3}{8} \quad (1)$$

Experimental evidence obtained from a shadowing procedure indicates that

$$\frac{W}{D}=0.25,$$

which reduces to

$$V=\frac{7}{48}\pi D^3 \quad (2)$$

For a particle where D=8 nm, $V=2.35\times10^2$ nm³ and where D=80 nm, $V=2.35\times10^5$ nm³. We can therefore generate 1000 particles (D=8 nm) from 1 particle (D=80 nm).

(ii) Calculation of amount of carbon gasified as a function of catalyst particle size

The number of moles of carbon gasified per second,

$$\frac{dn}{dt},$$

is given by

$$\frac{dn}{dt}=\frac{IDW\rho}{M,} \quad (3)$$

where
I is the rate of channel propagation
D is the particle diameter
W is the depth of the channel
$\rho$ is the density of graphite, 2.25 g cm⁻³
M is the atomic weight of carbon, 12.

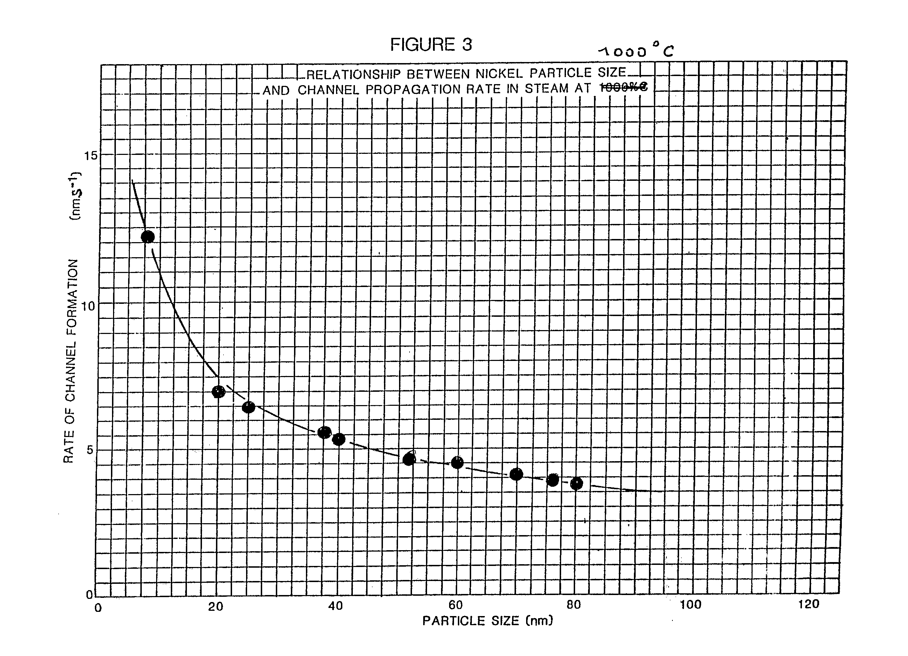

The experimentally determined relationship between rate of channel propagation and nickel particle size for gasification of carbon in steam at 1,000°C is given in Figure 3 from nickel/graphite specimens prepared following the procedure in Example 1.

These data were obtained from direct observation of the catalytic reaction using controlled atmosphere electron microscopy. The changes in appearance of the specimen are continuously recorded on video-tape and this information is subsequently transferred to 16 mm cine film. Detailed kinetic analysis is performed from frame by frame projection of the movie. In this particular case one measures the linear increase in channel length as a function of time; from such measurements it is a simple operation to calculate the rate of reaction of a given sized particle. Since the depths of channels vary from particle to particle, comparisons such as that given in Figure 3 are made from particles channeling at a similar depth to each other. This aspect is determined from the difference in contrast in the image between the channel and the surrounding unattacked graphite. Thus the only variables in the measurements plotted in Figure 3 are the particle sizes and the linear propagation rate of the channels.

From these data we find that the rate of channels propagated by 80 nm diameter particles is 3.75 nm s⁻¹, and that by 8 nm diameter particles is 12.2 nm s⁻¹. Assuming that W is

$$\frac{D}{4},$$

we can calculate the number of moles of carbon gasified per sec by each of these particles by substitution of the numerical values into equation 3. For 80 nm diam. particles,

$$\frac{dn}{dt}=1.125\times10^{-18} \text{ moles s}^{-1}$$

and for 8 nm diam. particles,

$$\frac{dn}{dt}=3.66\times10^{-20} \text{ moles s}^{-1}.$$

However, as shown previously one 80 nm diam. particle can create 1000, 8 nm diam. particles, and in this case the total number of moles of carbon gasified per second would be $3.66 \times 10^{-17}$ moles $s^{-1}$, i.e. this would result in a net increase in carbon gasification rate of 32.5 times that generated by the one larger particle.

TABLE 1

Treatments and hydrogen chemisorptions on nickel/graphoil

|  | Temperature (°C) | Hydrogen chemisorption measurements (C) and hydrogen desorption measurements (D) |
|---|---|---|
| A Reduction in $H_2$ ⎫ | 600 | |
| Evacuation ⎬ a | 550 | |
| Evacuation ⎭ | 25 | |
| Chemisorption of $H_2$ | 25 | $C_1$, $C_2$ |
| Treatment in $H_2$ ⎫ | 1095 | |
| Evacuation ⎬ b | 550 | |
| Evacuation ⎭ | 25 | |
| Chemisorption of $H_2$ | 25 | $C_3$, $C_4$ |
| Treatment in $H_2$ | 1000 | |
| Evacuation | 500 | |
| Desorption | 1000 | $D_1$ |
| Evacuation | 950 | |
| Evacuation | 25 | |
| Chemisorption of $H_2$ | 25 | $C_5$ |
| Steaming ⎫ | 800 | |
| Purging in He ⎬ c | 3 | |
| Evacuation ⎭ | 25 | |
| Chemisorption of $H_2$ | 25 | $C_6$ |
| Steaming | 1000 | |
| (c) | — | |
| Chemisorption of $H_2$ | 25 | $C_7$ |
| B a+b | — | |
| Chemisorption of $H_2$ | 25 | $C_3$ |
| Steaming | 1000 | |
| (c) | — | |
| Chemisorption of $H_2$ | 25 | $C_6$ |
| Treatment in $H_2$ | 600 | |
| Evacuation | 25 | |
| Chemisorption of $H_2$ | 25 | $C_8$ |

TABLE 2
Chemisorption of hydrogen on nickel/graphoil catalysts

| Run | | Treatment[a] | Volume $H_2$ adsorbed[b] |
|---|---|---|---|
| 1. | $C_1$ | Reduced 600°C, total | 0.080 |
| | $C_2$ | Reduced 600°C, reversible | 0.048 |
| | $C_3$ | Treated 1095°C, in $H_2$, 2 hrs. | 0.020 |
| | $C_4$ | Evacuated 25°C, following $C_3$ | 0.023 |
| | $C_5$ | Evacuated 1000°C | 0.0 |
| | $C_6$ | Steaming 800°C | 0.0 |
| | $C_7$ | Steaming 1000°C | 0.042 |
| 2. | $C_3$ | Reduced 600°C, treated 1000°C in $H_2$, 1 hr. | 0.0 |
| | $C_6$ | Steamed 1000°C, 1 hr. | 0.0425 |
| | $C_7$ | Reduced 600°C | 0.0525 |

[a]See Table 1 for details.
[b]Value at an equilibrium pressure of 200 Torr ($2.666 \times 10^4$ N/m²) as cc $H_2$ STP/gram of catalyst.

TABLE 3
X-ray diffraction and chemisorption data of treated nickel/graphoil specimens

| | Treatment | $H_2$ Chemisorption and X-ray |
|---|---|---|
| 1. | Reduced at 600°C | Large particles and normal $H_2$ chemisorption |
| 2. | Reduced at 600°C, treated in $H_2$ at 1000°C, evacuated at 950°C followed by steaming at 800°C. | Smaller particles, but poor $H_2$ chemisorption, about zero (see $C_6$ — Table 2). |

## Claims

1. A composition comprising highly dispersed, discrete particles of Ni, Co, Mo, or mixtures thereof on the surface of channels in graphite wherein said channels are orientated in a direction parallel to the basal plane thereof.

2. A composition according to claim 1 wherein said particles of metal have an average diameter below 100Å ($10^{-8}$ m), preferably below 25Å ($2.5 \times 10^{-9}$ m).

3. A composition according to claim 2 wherein the channels have been formed across the surface of the graphite by the catalytic gasification of a portion of said graphite with hydrogen in the presence of the metal.

4. A composition according to either of claims 1 and 3 wherein said graphite is mixed with amorphous carbon.

5. A composition according to any one of claims 1, 3 and 4 wherein said metal is Ni, Co or a mixture thereof, preferably nickel.

6. A process for forming a dispersion of a metal on graphite, said metal being Ni, Co, Mo or a mixture thereof comprising the sequential steps of:

(a) contacting a composite of said metal and graphite with a net reducing, hydrogen-containing atmosphere at a temperature ranging between 800—975°C for a time sufficient for the metal to form a plurality of metal-containing channels in said graphite;

(b) contacting said metal-containing channeled composite formed in (a) with a net reducing hydrogen-containing atmosphere at a temperature of at least 975°C for a time sufficient for the metal in said channels to spread out and chemically wet as a film at least a portion of the surface of said channels; and

(c) contacting said metal-wetted channeled composite formed in (b) with an oxidizing atmosphere at a temperature of at least 800°C to break up the film of metal phase in said channels into discrete particles of said metal on said graphite wherein the average diameter of said particles is less than 100Å ($10^{-8}$ m).

8

7. A process according to claim 6 wherein said graphite is mixed with amorphous carbon.

8. A process according to either of claims 6 and 7 wherein said metal is nickel.

9. A process according to claim 8 wherein the amount of nickel present in said composite is from 5 to 30 wt. % of the total weight thereof.

10. A process for catalytically gasifying carbon with steam in the presence of a catalytic metal comprising Ni, Co, Mo and mixtures thereof, said process comprising the steps of:

(a) contacting a composite of said metal and graphite with a net reducing, hydrogen-containing atmosphere at a temperature ranging between 800—975°C for a time sufficient for the metal to form a plurality of metal-containing channels in the graphite;

(b) contacting said channeled composite formed in (a) with a net reducing hydrogen-containing atmosphere at a temperature of at least 975°C for a time sufficient for said metal in said channels to spread out and chemically wet as a film at least a portion of the surface of said channels;

(c) contacting said metal-wetted, channeled composite formed in (b) with an oxidizing atmosphere at a temperature of at least 800°C to form a dispersion of discrete particles of said metal on said graphite wherein the average diameter of said particles is below 100Å ($10^{-8}$ m); and

(d) contacting the dispersed metal/graphite composite formed in (c) with steam at a temperature of at least 800°C for a time sufficient for the metal to achieve the desired amount of gasification of the carbon.

11. A process according to claim 10 wherein the contacting temperature in step (d) ranges from 800—1,000°C.

12. A process according to either of claims 10 and 11 wherein in step (c) the contacting atmosphere is carbon dioxide or steam.

13. A process according to any one of claims 10 to 12 wherein said catalytic metal is Ni, Co or a mixture thereof, preferably Ni.

14. A process according to any one of claims 10 to 13 wherein said oxidizing atmosphere in (c) comprises from 5% to 100% steam.

15. A process according to any one of claims 6 to 14 wherein the average diameter of said metal particles is less than 25Å ($2.5 \times 10^{-9}$ m).

**Patentansprüche**

1. Zusammensetzung gekennzeichnet durch hochdispergierte, diskrete Teilchen aus Ni, Co, Mo oder Mischungen derselben auf der Oberfläche von Kanälen in Graphit, wobei die Kanäle in einer Richtung parallel zur Basisfläche derselben orientiert sind.

2. Zusammensetzung nach Anspruch 1, dadurch gekennzeichnet, daß die Metallteilchen einen durchschnittlichen Durchmesser von weniger als 100 Å, vorzugsweise weniger als 25 Å besitzen.

3. Zusammensetzung nach Anspruch 2, dadurch gekennzeichnet, daß die Kanäle auf der Oberfläche des Graphits durch katalytische Vergasung eines Teils des Graphits mit Wasserstoff in Gegenwart des Metalls gebildet worden sind.

4. Zusammensetzung nach Anspruch 1 oder 3, dadurch gekennzeichnet, daß der Graphit mit amorphem Kohlenstoff gemischt ist.

5. Zusammensetzung nach einem der Ansprüche 1, 3 oder 4, dadurch gekennzeichnet, daß das Metall Ni, Co oder eine Mischung derselben, vorzugsweise Nickel ist.

6. Verfahren zur Herstellung einer Dispersion eines Metalls auf Graphit, wobei das Metall Ni, Co, Mo oder eine Mischung derselben ist, gekennzeichnet durch die folgenden aufeinanderfolgenden Verfahrensstufen:

a) Kontaktieren eines Verbundmaterials aus dem Metall und Graphit mit einer netto-reduzierenden, Wasserstoff enthaltenden Atmosphäre bei einer Temperatur im Bereich zwischen 800 und 975°C über einen für das Metall zur Bildung einer Vielzahl von metallhaltigen Kanälen in dem Graphit ausreichend langen Zeitraum;

b) Kontaktieren des metallhaltigen, Kanäle aufweisenden, in Stufe (a) gebildeten Verbundmaterials mit einer netto-reduzierenden, Wasserstoff enthaltenden Atmosphäre bei einer Temperatur von mindestens 975°C über einen für das Metall ausreichend langen Zeitraum, um sich in den Kanäle auszubreiten und mindestens einen Teil der Oberfläche dieser Kanäle chemisch als ein Film zu benetzen; und

c) Kontaktieren des metallbenetzten, Kanäle aufweisenden, in Stufe (b) gebildeten Verbundmaterials mit einer oxidierenden Atmosphäre bei einer Temperatur von mindestens 800°C, um den Metallphasefilm in den Kanälen im diskrete Teilchen des Metalls auf dem Graphit aufzubrechen, wobei der durchschnittliche Durchmesser der Teilchen weniger als 100 Å beträgt.

7. Verfahren nach Anspruch 6, dadurch gekennzeichnet, daß der Graphit mit amorphem Kohlenstoff gemischt ist.

8. Verfahren nach Anspruch 6 oder 7, dadurch gekennzeichnet, daß das Metall Nickel ist.

9. Verfahren nach Anspruch 8, dadurch gekennzeichnet, daß die im Verbundmaterial vorhandene Menge Nickel 5 bis 30 Gew.% des Gesamtgewichtes beträgt.

10. Verfahren zum katalytischen Vergasen von Kohlenstoff mit Dampf in Gegenwart eines katalytischen Metalls, umfassend Ni, Co, Mo und Mischungen derselben, gekennzeichnet durch folgende Verfahrensstufen:

(a) Kontaktieren eines Verbundmaterials aus dem Metall und Graphit mit einer netto-reduzierenden, Wasserstoff enthaltenden Atmosphäre bei einer Temperatur im Bereich zwischen 800 und 975°C über einen für das Metall ausreichenden Zeitraum, um eine Vielzahl von Metall enthaltenden Kanälen in dem Graphit zu bilden;

(b) Kontaktieren des Kanäle aufweisenden, in Stufe (a) gebildeten Verbundmaterials mit einer netto-reduzierenden, Wasserstoff enthaltenden Atmosphäre bei einer Temperatur von mindestens 975°C über einen für das Metall ausreichenden Zeitraum, um sich in den Kanälen auszubreiten und mindestens einen Teil der Oberfläche dieser Kanäle als ein Film chemisch zu benetzen;

(c) Kontaktieren des metallbenetzten, Kanäle aufweisenden, in Stufe (b) gebildeten Verbundmaterials mit einer oxidierenden Atmosphäre bei einer Temperatur von mindestens 800°C, um eine Dispersion von diskreten Teilchen des Metalls auf dem Graphit zu bilden, wobei der durchschnittliche Durchmesser dieser Teilchen weniger als 100 Å beträgt; und

(d) Kontaktieren des in Stufe (c) gebildeten Verbundmaterials aus dispergiertem Metall und Graphit mit Dampf bei einer Temperatur von mindestens 800°C über einen für das Metall ausreichenden Zeitraum, um den gewünschten Umfang an Kohlenstoffvergasung zu erzielen.

11. Verfahren nach Anspruch 10, dadurch gekennzeichnet, daß die Kontaktierungstemperatur in Stufe (d) im Bereich von 800 bis 1000°C liegt.

12. Verfahren nach Anspruch 10 oder 11, dadurch gekennzeichnet, daß die kontaktierende Atmosphäre in Stufe (c) Kohlendioxid oder Dampf ist.

13. Verfahren nach einem der Ansprüche 10 bis 12, dadurch gekennzeichnet, daß das katalytische Metall Ni, Co oder eine Mischung derselben, vorzugsweise Ni ist.

14. Verfahren nach einem der Ansprüche 10 bis 13, dadurch gekennzeichnet, daß die oxidierende Atmosphäre in (c) aus 5 bis 100% Dampf besteht.

15. Verfahren nach einem der Ansprüche 6 bis 14, dadurch gekennzeichnet, daß der durchschnittliche Durchmesser der Metallteilchen weniger als 25 Å beträgt.

**Revendications**

1. Composition comprenant des particules distinctes, finement dispersées de Ni, Co, Mo ou des mélanges de ceux-ci à la surface de sillons dans du graphite, ces sillons étant orientés dans une direction parallèle au plan de base du graphite.

2. Composition selon la revendication 1 dans laquelle ces particules de métal ont un diamètre moyen inférieur à 100 Angströms ($10^{-8}$ mètres) de préférence inférieur à 25 Angströms ($2,5 \ 10^{-9}$ mètres).

3. Composition selon la revendication 2 dans laquelle les sillons ont été formés à travers la surface du graphite par gazéification catalytique d'une portion de ce graphite par l'hydrogène en présence du métal.

4. Composition selon l'une des revendications 1 ou 3, dans laquelle ce graphite est mélangé avec du carbone amorphe.

5. Composition selon l'une quelconque des revendications 1, 3 ou 4, dans laquelle ce métal est Ni, Co ou un mélange de ceux-ci, de préférence le nickel.

6. Procédé pour former une dispersion d'un métal sur du graphite, ce métal étant Ni, Co, Mo ou un mélange de ceux-ci, comprenant les étapes successives suivantes:

a) mise en contact d'une composite de ce métal et de graphite avec une atmosphère globalement réductrice, contenant de l'hydrogène, à une température comprise entre 800 et 975°C pendant un temps suffisant pour que le métal crée une pluralité de sillons contenant du métal dans ce graphite;

b) mise en contact du composite comportant des sillons contenant du métal formé selon a) avec un atmosphère globalement réductrice contenant de l'hydrogène, à une température d'au moins 975°C, pendant un temps suffisant pour que le métal qui se trouve dans les sillons s'étale et forme une pellicule qui mouille chimiquement au moins une portion de la surface des sillons;

c) mise en contact de ce composite comportant des sillons et mouillé de métal formé selon b) avec une atmosphère oxydante, à une température d'au moins 800°C, pour briser la pellicule de phase métallique se trouvant dans les sillons en particules distinctes de métal sur ce graphite, de telle sorte que le diamètre moyen de ces particules soit inférieur à 100 Angströms ($10^{-8}$ mètres).

7. Procédé selon la revendication 6 dans lequel le graphite est mélangé avec du carbone amorphe.

8. Procédé selon l'une des revendications 6 ou 7 dans lequel le métal est le nickel.

9. Procédé selon la revendication 8 dans lequel la quantité de nickel présente dans le composite est comprise entre 5 et 30% en poids par rapport au poids total du composite.

10. Procédé pour gazéifier le carbone par voie catalytique au moyen de vapeur d'eau en présence d'un métal catalytique comprenant Ni, Co, Mo et des mélanges de ceux-ci, ce procédé comprenant les étapes suivantes:

a) mise en contact d'un composite de ce métal et de graphite avec une atmosphère globalement réductrice, contenant de l'hydrogène, à une température comprise entre 800 et 975°C pendant un temps suffisant pour que le métal crée une pluralité de sillons contenant du métal dans le graphite;

b) mise en contact du composite comportant des sillons contenant du métal formé selon a) avec une atmosphère globalement réductrice contenant de l'hydrogène, à une température d'au moins 975°C, pendant un temps suffisant pour que le métal qui se trouve dans les sillons s'étale et forme une pellicule qui mouille chimiquement au moins une portion de la surface des sillons;

c) mise en contact de ce composite comportant des sillons et mouille de métal formé selon b) avec une atmosphère oxydante, à une température d'au moins 800°C pour former une dispersion de particules distinctes du métal sur ce graphite, de telle sorte que le diamètre moyen de ces particules soit inférieur à 100 Angströms ($10^{-8}$ mètres); et

d) mise en contact du composite métal dis- persé/graphite formé selon c) avec de la vapeur d'eau à une température d'au moins 800°C, pendant un temps suffisant pour que le métal réalise la gazéification de la quantité désirée de carbone.

11. Procédé selon la revendication 10, dans lequel la température de contact dans l'étape d) est comprise entre 800 et 1000°C.

12. Procédé selon l'une des revendications 10 ou 11, dans lequel l'atmosphère mise en contact dans l'étape c) est constituée d'anhydride carbonique ou de vapeur d'eau.

13. Procédé selon l'une quelconque des revendications 10 à 12, dans lequel le métal catalytique est Ni, Mo ou un mélange de ceux-ci, de préférence Ni.

14. Procédé selon l'une quelconque des revendications 10 à 13, dans lequel l'atmosphère oxydante dans c) comprend 5 à 100% de vapeur d'eau.

15. Procédé selon l'une quelconque des revendications 6 à 14, dans lequel le diamètre moyen des particules de métal est inférieur à 25 Angströms ($2,5 \times 10^{-9}$ mètres).

## FIGURE 1

GRAPHITE

ARMCHAIR FACE
$\langle 10\bar{1}0 \rangle$ DIRECTION

ZIG-ZAG FACE
$\langle 1\bar{1}20 \rangle$ DIRECTION

## FIGURE 2

W

D

1

FIGURE 3

RELATIONSHIP BETWEEN NICKEL PARTICLE SIZE AND CHANNEL PROPAGATION RATE IN STEAM AT 1000°C